# EUROPEAN PATENT SPECIFICATION

(11) **EP 1 440 843 B1**
(45) Date of publication and mention of the grant of the patent: **22.04.2009**
(21) Application number: 04100239.5
(22) Date of filing: 23.01.2004
(51) Int. Cl.: B60P 1/54, B62D 53/00

(54) **Control of the crane of a forest machine during driving**
Steuerung eines Krans einer Forstmaschine während des Fahrens
Système de commande d'une grue d'une machine de sylviculture pendant la marche de la machine

(30) Priority: 24.01.2003 FI 20030112
(43) Date of publication of application: 28.07.2004
(73) Proprietor: John Deere Forestry Oy, 33101 Tampere (FI)
(72) Inventor: Moisander, Jukka, 33720 Tampere (FI); Ahola, Petri, 33820 Tampere (FI); Lepistö, Jari, 33800 Lempäälä (FI)
(74) Representative: Pursiainen, Timo Pekka

(56) References cited:
- EP-A- 1 201 832
- WO-A-97/10139
- DE-A1- 3 817 645
- US-A- 4 505 396

## Description

The invention relates to a method for controlling the position of a knuckle boom crane during movements of a forest working machine. The invention relates to a forest working machine.

For harvesting, forest working machines, such as harvesters, are known which move on a terrain and in which a manipulating apparatus, a so-called harvester head, is arranged at the end of a crane and is intended for cutting, felling and delimbing a standing trunk and sawing it to pieces of desired length. The harvester head is provided with the necessary feeding and sawing means for manipulating the trunks. The sawed trunks are collected with another known working machine that moves on the terrain, and its manipulating device, wherein the working machine in question is a forwarder equipped with a loading grapple, and the trunks are transported in its load space. Combined machines are also known, in which the functions of the harvester and the forwarder are combined.

The combined machines, harvesters and forwarders typically comprise two successive frame structures, which are arranged, by means of a frame joint, to swivel around a vertical axis in relation to each other and/or to swivel around a horizontal axis in relation to each other. In forwarders, the front frame is normally carried by one pair of wheels or two swinging bogie structures with two wheels each. The cabin and the power source are normally placed on top of the front frame. The rear frame is typically carried by two swinging bogie structures with two wheels each. Alternatively, each wheel is connected to the rear frame by a separate suspension, as in US patent 5,366,337 or 6,299,181.

On top of the rear frame, a load space is placed, as well as a crane which is generally of the type of a knuckle boom whose outermost end typically comprises a telescopic unit with a grapple. The crane on the rear frame is typically connected directly behind the frame joint, in front of the load space, wherein it is simultaneously placed behind the cabin.

One such forwarder is Timberjack ^{TM} 1010B or Timberjack^{TM} 1110C. The crane, in turn, is placed on top of a swivelling device, by means of which the crane can be swivelled around a vertical axis during manipulation of loads by the side of the forwarder. When the crane is not in use, for example during driving of the forwarder, it lies on the bottom of the load space or on top of the load, against which the grapple, the outermost end or the outermost ends of the crane are supported. Typically, the grapple of the crane is gripping either the outermost trunks or the bottom of the load space, its rear part.

The crane and its swivelling device may also be placed in the rear part of the front frame, wherein it is placed on top of the cabin or in front of the frame joint, typically behind the cabin, as in US patent 3,450,222. One such forwarder is Timberjack ^{TM} 810B. Also in this case, the outermost end of the crane lies in the load space during normal driving.

In harvesters, the crane is typically placed in the front part of the front frame, in front of the cabin, and the power source is placed on the rear frame. In some special devices, as in US patents 4,505,396, which discloses the preamble of claims 1 and 13, and 4,506,792, a processing unit is also placed on the front frame, for example for delimbing and cutting of trunks. Said US patents also present means for directing the cabin and the crane in the same direction during working. The orientation of the cabin towards the harvester head is also discussed in application EP 1 201 832 A1.

When the forwarder is used to transport a load or is driven unloaded in the terrain or on a road, the crane is normally not in use but it lies on top of the load or in the load space, even in such a way that the grapple is not connected to anything. In such a case, a so-called floating engagement is turned on in the pressurized medium system of the swivelling device of the crane, allowing the crane to swivel freely around the vertical direction. The aim is that the position of the crane is not rigid or locked in relation to the front frame, because otherwise the crane, swinging with the front frame, would move considerably in relation to the rear frame. When the swivelling device of the crane floats freely, the crane and the grapple swing to a lesser extent in relation to the rear frame, because the end of the crane lies in the load space or on top of the load and thus tends to remain stationary.

However, the problem is that the end of the crane still moves to a great extent in relation to the rear frame, particularly when the forest working machine is tilted. The tilting is caused, for example, by crossing an obstacle or driving in a slope. The slanted crane is swivelled by gravity, because said neutral engagement is used and the forces keeping the grapple stationary are exceeded by the effect of gravity. As a result, the grapple moves on the bottom of the load space or on top of the load also when the grapple is gripping trunks.

It is an aim of the present invention to present a way of minimizing or totally eliminating the disadvantages caused by the movement of the crane. In particular, the aim is to have an active effect on the behaviour of the crane and to use the control to prevent any unnecessary movement of the crane when the forest working machine is moving. In an advantageous embodiment, the particular aim is to keep the grapple, or the part of the crane which lies in the load space of the forwarder, as stationary as possible.

One embodiment of the invention is also suitable for some harvesters with no load space, wherein the position of the crane can be automatically controlled during driving. Thus, the driver does not need to take care that, for example, the crane mounted on the front frame remains substantially in the same position and direction in relation to the rear frame, when the crane is swivelled above the rear frame, or *vice versa.* Thus, the total length of the harvester can be reduced and the manipulation in the terrain becomes easier. According to prior art, the crane of the harvester cannot be turned in such a way (about 180°) that it would extend onto the rear frame, wherein it is normally above the front frame.

The method according to the invention is presented in claim 1. The forest working machine according to the invention is presented in the claim 13. Some preferred embodiments of the invention will be presented in the independent claims.

Thanks to the invention, it is possible to minimize the movement of the whole crane, its outermost end, the grapple, or any part lying in the load space or on top of the load in the forwarder. In the invention, the control of the swivelling device of the crane depends on the angular position between the front frame and the rear frame. The unnecessary movement of the crane is also prevented when driving in a slope and when crossing obstacles. The operation of the invention can be improved by coupling other joints of the crane in so-called free floating. The invention is also useful during driving on a flat surface, because when driving in a curve, the centrifugal forces cannot cause swinging of the crane to the side, even though the driving speed were high and the position of the forest working machine were changed.

In one embodiment of the invention, no part of the crane lies on top of the structures of the load space, on the load, or on the rear frame, but active control is still in use, and the crane with its tools is placed in a given position above the load space or the rear frame. The advantage is thus that when the working machine is driven in a curve, the driver does not also need to continuously take care of swivelling the crane in such a way that it does not hit structures of the working machine, for example a bunk or stakes, or trees growing by the side of its driveway.

The control system, operated by pressurized medium, can also be easily implemented by using a small number of control valves to interconnect the control circuits of the pressurized medium systems of the swivelling device and the frame joint, and by controlling said valves with the control system of the forest working machine, such as, for example, the Timberjack TMC^{TM} system.

In the following, the invention will be described in more detail by using a preferred embodiment as an example, wherein reference is at the same time made to the appended drawings, in which:
- Fig. 1: shows the principle of a forwarder in a top view, when driving straight ahead,
- Fig. 2: shows the forwarder of Fig. 1 when driving in a curve and when the crane turns with the front frame,
- Fig. 3: shows the forwarder of Fig. 1 when driving in a curve and when the crane is actively controlled,
- Fig. 4: shows the principle of a harvester, in a top view, when driving in a curve and when the crane is actively controlled, and
- Fig. 5: shows a control system for actively controlling the crane.

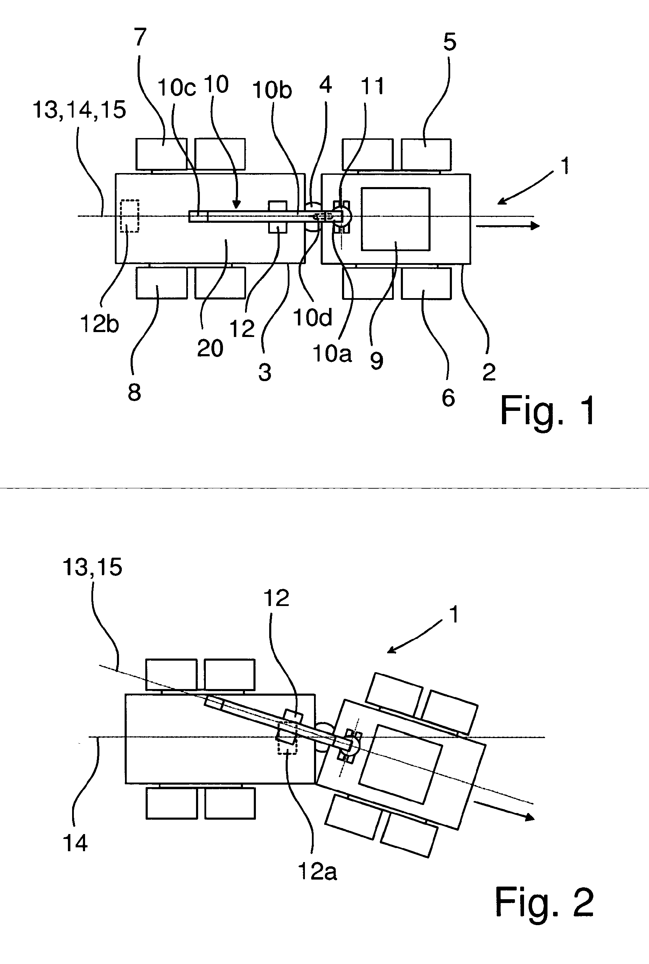

Figure 1 shows a forest working machine which is a forwarder whose assembly and principle correspond to the structure of, for example, the Timberjack^{TM} 810C forwarder. This forwarder 1 comprises a front frame 2 and a rear frame 3 which are interconnected by means of a frame joint 4, wherein the frames can pivot around the vertical axis and preferably also swivel around the horizontal axis joining the longitudinal direction 13 of the forwarder which, in Fig. 1, is simultaneously the driving direction of the front frame 2. In some cases, the frame joint 4 also allows the turning of the frames around the horizontal axis which is transverse to the direction 13. The structure and operation of the frame joint 4, as well as the structure of the frames, are known as such.

In the forwarder of Fig. 1, the front frame 2 is supported by swinging bogies 5 and 6 with two wheels each, and the rear frame 3 is supported by swinging bogies 7 and 8 with two wheels each. The structure of the bogies is known as such, and the number of the wheels may vary, as presented above. The bogie can be replaced by independent wheel suspensions, and chain tracks may also be connected to the wheels, or they may be replaced by caterpillar tracks.

The front frame 2 is provided with a cabin 9, and behind the cabin, a crane 10 is mounted on the front frame 2 by means of a swivelling device 11. The swivelling device 11 forms a kind of a traverser, onto which the crane 10 is mounted and which can pivot around a vertical axis of rotation. Thanks to the swivelling, the grapple 12 of the crane 10 can be extended to the sides of the forwarder 1, wherein the grapple 12 can be used for loading or unloading of timber and trunks. The crane 10 can also be provided with a harvester head instead of the loading grapple 12. In Fig. 1, the crane 10 comprises a vertical pillar 10a, primarily a horizontal boom 10b and an outermost boom 10c, which are pivoted in relation to each other, around the horizontal axis, and the outermost boom 10c consists of three parts and operates telescopically, and its end is provided with a tool, such as the grapple 12. Alternatively, the crane only comprises three or four boom parts, and the grapple 12 is connected to the end of the outermost boom part. Normally, the pillar 10a cannot be tilted forward or backward.

In Fig. 1, the outermost boom 10c is bent under the horizontal boom 10b, wherein the end of the outermost boom 10c is, this time, closer to the front end than the rear end of the rear frame 3. The grapple 12 can also be used to grip the structures of the load space 20 at a desired location, normally its rear part, at the point 12b. The grapple 12 lies on top of the rear frame 3 or the load in the load space 20. Alternatively, the grapple 12 is placed above the load space 20, at a distance from the bottom of the load space 20 or from the load.

Figure 1 also shows the driving direction 13 of the front frame 2, the driving direction 14 of the rear frame 3, and the direction 15 of the crane 10, which directions are, in this case, joined, when driving straight ahead. The direction 15 of the crane also indicates the position of the horizontal boom 10b or the direction in which the grapple 12 is placed, seen from the direction of the swivelling device 11. As seen, the crane 10 extends backwards from the front frame 2.

Figure 2 shows what happens when the forwarder 1 is driven in a curve, or the driving direction 13 of the front frame is changed. This corresponds to a situation in which the neutral, inactive floating engagement is used in the control system and the swivelling device 11, wherein the crane 10 is swung to the side by the centrifugal forces, which was the problem of prior art. In this case, the direction 15 of the crane and the direction 13 of the front frame remain the same, wherein the grapple 12 moves considerably from its original position 12a. This position also corresponds to the position in which the swivelling device 11 is locked in a given position complying with Fig. 1, wherein in a curve, the crane 10 is forced to swivel to the side in the position corresponding to Fig. 2. For this reason, locking is not a good alternative.

The quantity of the free swinging of the crane 10, *i.e.* the angular position C of the direction 15 in relation to the direction 14, will vary and depend *e.g.* on the forces effective on the grapple 12. Similarly, the crane 10 swings to the side when the tilted forwarder 1 is driven in a slope, although it would be driven straight ahead. The reference position 12a of the crane 10 can also be at the side of the central line, and the corresponding angular position of the swivelling device 11 is simultaneously the reference position or the 0 position, in view of the changes.

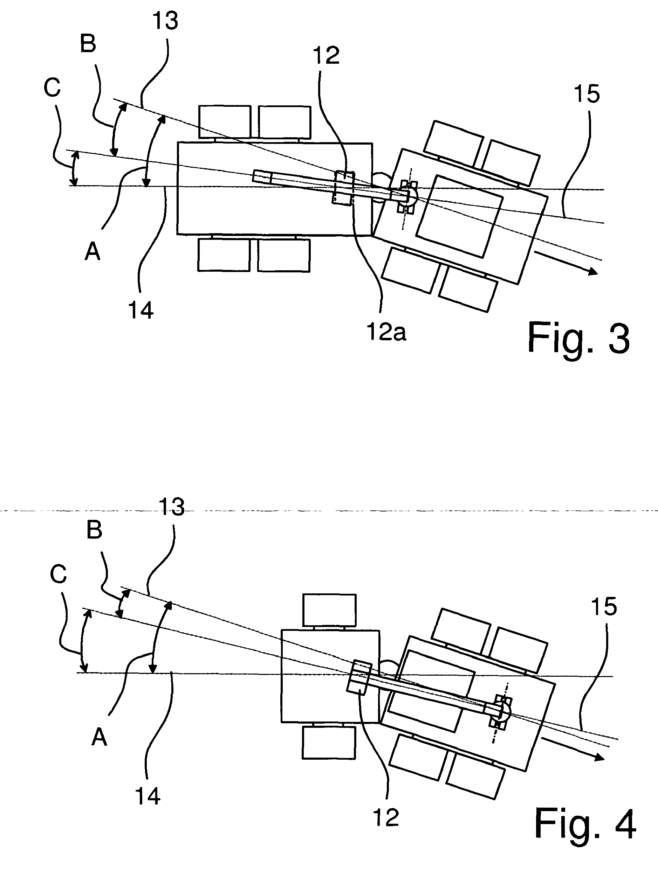

Figure 3 shows a situation in which the active control of floating is used and when the forwarder 1 is driven in a curve or the driving direction 13 is changed, wherein the direction 14 of the rear frame differs from the direction of the front frame 13 (angular position A). By means of the active control of the swivelling device 11, the position of the grapple 12 differs from its original position 12a as little as possible, and its swinging or moving is prevented or limited to a desired extent. If the place where the grapple 12 is lying is further back than in Fig. 3, the angular position C between the directions 14 and 15 is controlled to be smaller than in Fig. 3. The change in the direction 15 is thus greater, compared with the starting position of Fig. 1. As a result, the end of the boom of the crane 10 will also swing to a lesser extent. The intersection of the directions 14 and 15 is preferably located at the point, or on the same line in the vertical direction, where the grapple 12 or a part of the crane 10 lies in the load space 20 or on top of the load, to make the movement as small as possible. Alternatively, or additionally, it is possible to keep that part of the crane 10 which is located outermost from the swivelling device 11, on the line 14 or, at the most, at a desired distance from the same. In this way, it is possible to avoid the movement of the end of the crane 10 to the side of the forwarder 1, when driving in a sharp curve. The rotational angle of the swivelling device 11 of the crane 10 (rotary position B which is the difference between the directions 13 and 15) is dependent on the angular position between the frames 2 and 3 (position A, which is the difference between the directions 13 and 14).

The turning direction of the swivelling device 11 is also opposite to the turning direction of the front frame 2 or the frame joint 4. It can be stated that the rotational angle B of the swivelling device 11, or its change, is normally smaller than the rotational angle A of the front frame 2 or the frame joint 4, or its change. The correlation can be defined as a parameter X which indicates the relation between the angular position A and the angular position B. The correlation X can also be defined on the basis of the change in said angular positions in relation to a selected reference position. Alternatively, the correlation is defined by means of geometry, for example on the basis of the point in the crane 10 that is to be kept as close to a given point in the rear frame 3 as possible. Examples of said points include the grapple 12 and its reference position 12a. The correlation can also be selected empirically. If necessary, it is possible to define that the rotational angles A and B correspond to each other (X = 1), wherein the crane 10 is always parallel to the rear frame 3. This is a useful alternative during short movements and working of the forwarder, particularly when no part of the crane 10 lies in the load space 20, because otherwise the grapple 12 would move on top of the load space.

When the forwarder 1 is driven straight ahead, then, thanks to the active control, the crane 10 cannot swing to the side even though one were driving in a slope or it were tilted during crossing of an obstacle. The crane 10 is kept in the desired reference position, *i.e.* in the desired angle B. The position of the crane 10 is changed, if the angular position between the frames is simultaneously changed.

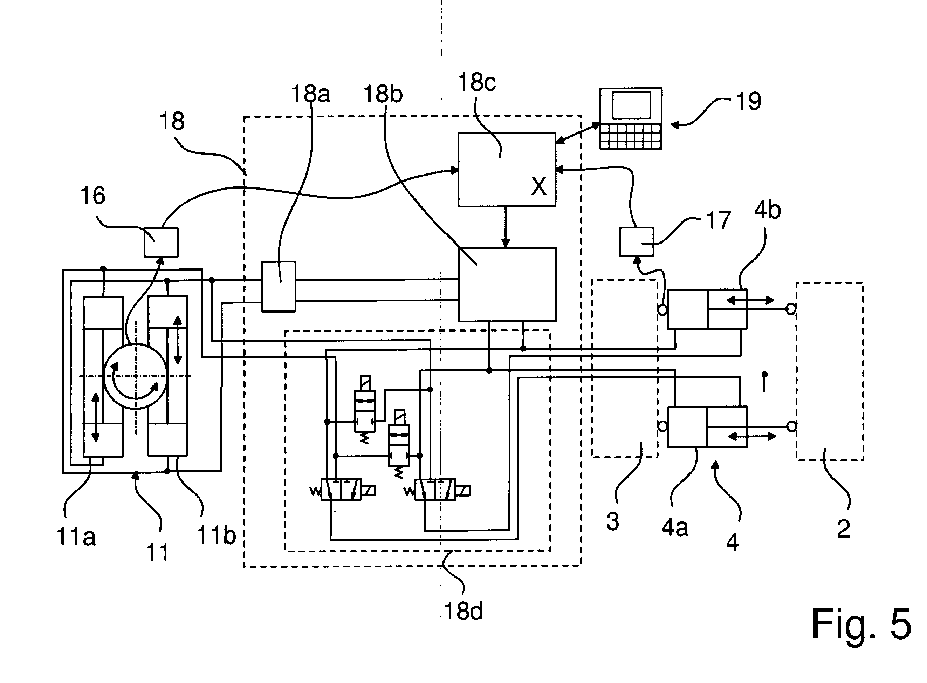

Figure 5 shows the control system 18 for implementing the floating. The swivelling device 11 of the crane is known as such, and it generally comprises two mechanical cylinders 11a and 11b, which are operated by a pressurized medium and which rotate a structure used as a traverser onto which the crane 10 is mounted or which is an integral part of the crane 10. For example, it is known to use a combination of a toothed bar (in the cylinder 11a and 11b) and a toothed wheel (in the traverser) for the transmission.

If necessary, the swivelling device 11 can be switched on so-called neutral, uncontrolled floating, for example by means of valves 18a, in a way known as such. This is, for example, an electrically controlled, normally closed 2/2-directional valve which opens a connection between the chambers of different ends of the same cylinder (11a and 11b). The control circuit of the pressurized medium system 18b comprises the necessary pressure source, tank, and controllable valve means. The pressurized medium is led to the working chamber via a pipework and valves, and back to the tank or the control circuit.

The system 18 comprises an electric control device 18c which can be preferably modified by programming and which controls the working machine as well as all the auxiliary functions related to the same. The control device 18c also informs about the operation of the machine by means of a display in the cabin, and via a user interface 19, various settings and adjustments, which may also be driver-specific, can be stored in the system. The control device 18c is also programmed to implement the function according to the invention, which modification work as such will be obvious for a person skilled in the art on the basis of this description. The second embodiment of the invention, which is based on the use of sensors, is easy to implement merely by modifications in the control device 18c. The swivelling device 11 is thus controlled on the basis of information from the sensors but by using valves known as such, for example the first proportional directional valve of the pressurized medium circuit 18b, wherein the entry of pressurized medium in the actuators is controlled. The pressurized medium, in turn, produces the force effect of the actuator.

In the first embodiment of the invention, the actuators 4a, 4b (*e.g.* cylinders) of the frame joint 4 and the actuators 11a, 11b of the swivelling device are coupled in series, if needed, for example by the pressurized medium circuit 18d shown in Fig. 5, by using, for example, electrically controlled, normally closed 2/2 directional valves (as well as 3/2 directional valves), wherein the second proportional directional valve of the system 18b, which controls the function of the frame joint 4, simultaneously controls the swivelling position of the swivelling device 11. When the frames 2 and 3 are turned, the actuators 4a and 4b, coupled in parallel, move in different directions and the angular position is changed. The actuators 4a and 4b can be mounted directly between the frames 2 and 3, but the turning can also be implemented in such a way that the actuators are coupled between the frame joint 4 and the frame to be turned.

The correlation or mathematical relation between the angular position and the rotary position is defined as parameter X in the control device 18c where it can be changed and where it can be stored. In the second embodiment of the invention, the separate circuit 18d will not be necessary, but the control device 18c uses said proportional valve to control the position of the crane 10 depending on the angular position. The angular position is defined, for example, by sensors. In the first embodiment, the correlation X is bound and is only based on the settings of the pressurized medium system 18d or the dimensions of the components. When the actuators 4a (or 4b) and 11a (or 11b) are cylinders coupled in series, the transmission ratio, *i.e.* the parameter X, is selected by suitable dimensioning the ratio between the surface areas of their pistons, considering the volume flows to be transferred. For example, the relation X corresponds to the position 12b in Fig. 3. If the relation is to be changed, the circuit 18c is used either to reduce (smaller turning movement) or to increase (greater turning movement) the volume flow to be transferred to the swivelling device 11. For the control, suitable control valves are used, for example flow divider valves. According to a third embodiment of the invention, the control device 18c controls said volume flow in the above-described manner. Preferably, said ratio can be freely defined, either in the control device 18c or by means of adjustments of the components 18d, depending on the type of the crane 10 and on the desired function.

In the control device 18c, it is possible to select alternatives representing different positions of the crane 10, on the basis of which said correlation is also determined. If desired, the crane 10 can be driven manually, or also automatically by means of the control system 18, to a reference position, in relation to which the changes in the rotary position 15 are implemented. The reference position complies, for example, to Figs. 1 or 4. If the frames 2 and 3 are thus swivelled, this can be taken into account by the control by using the sensor 17 to compensate for the position error in relation to the position of Fig. 1. The driver switches the active floating on or off in the given situation by using, for example, the user interface 19.

Figure 5 also shows sensors 16 and 17 which are not compulsory in the first embodiment of the invention. The control system 18 monitors the angle or position between the frames 2 and 3, for example, by means of a signal from an angular or position sensor 17. The position can be determined on the basis of the frame joint 4 or one of its cylinders 4a or 4b, or on the basis of the position of any other suitable part. The position of the crane 10 is determined on the basis of the signal from the angular or position sensor 16, wherein its position is known. The sensor is preferably placed in the swivelling device 11. Thus, the crane 10 is perhaps already placed on top of the load space 20, but it may be that the crane 10 extends outside the load space 20, wherein it must first be brought, manually or automatically, to a desired reference or starting position above the load space 20. The reference position generally corresponds to the direction 15 of Fig. 1. For the control 19, either a desired relation X is defined, or it is determined which part of the crane 10 is to be kept stationary. If the crane 10 or the grapple 12 has one or more standard positions in which they are kept, it is possible to select a separate, predetermined relation X for each standard position. If, at first, the crane 10 is set manually in the given position, and the active floating control is then switched on, the sensor 16 will not be necessary. However, the sensor 16 makes it possible to check the position of the crane 10 and to monitor if the crane 10 has reached the correct position during the control, and in this way, automatic return to the initial position is also possible.

The rotary position 15 of the crane 10 is preferably changed simultaneously when the frames 2 and 3 are swivelled, wherein *e.g.* the grapple 12 is moved as little as possible. The crane 10 is kept stationary when the position of the frames is not changed.

The changes or amendments required in the control system 18 can be implemented by a person skilled in the art on the basis of this description, and they can be modified depending on the more detailed structure and type of the forest working machine in question. The type and mode of action of the sensors 16 and 17 can be selected, and they are determined on the basis of the type of the swivelling device 11 or the frame joint 4 used. Almost any generated signal can be used, as long as it indicates the angular positions of the frames 2 and 3 and the angular difference between the same.

The crane 10 normally comprises an actuator, *i.e.* a cylinder, which is coupled between the pillar 10a and the boom 10b. In one embodiment of the invention, in which the grapple 12 lies either on top of the load or on the load space, this actuator 10d is switched to floating, wherein the horizontal boom 10b can rise or descend freely. The pillar 10a is fixed in the vertical position. This is advantageous particularly in situations, in which the front frame 2 is also pivoted in relation to the rear frame 3, for example when the wheels 5 (or 6) of the front frame 2 are crossing a small hillock. If said cylinder is locked, the grapple 12 will move slightly in relation to the rear frame 3, because the front frame 2 and thereby the crane 10 are tilted, in spite of the active control. The control system 18 takes care of controlling the floating simultaneously with the control of the swivelling device.

Figure 4 shows the application of the invention in a forest working machine 1 which is a harvester. The numbering of the parts and the directions corresponds to the numbering in the other drawings, but the harvester 1 does not comprise any load space, and the swivelling device 11 is typically placed foremost in the front frame 2; similarly, the power source is generally on top of the rear frame 3. In this case, the crane 10 is placed in such a way that it is at a distance above the rear frame 3, wherein the function discussed in connection with Fig. 3 and the above-presented principles of control are valid also in this case. Normally, the rear frame 3 of the harvester 1 does not comprise a place where the grapple 12 or the crane could lie, but with the invention, it is now possible to place one there. This location may also be provided with means for fixing the grapple. The crane 10 is not oriented forwards, as normally, and thereby it does not take space during driving in a curve. Also, the driver does not need to monitor the movements of the outermost end of the crane 10, if this part is defined to be such that it moves as little as possible in the lateral direction.

The invention is not limited solely to the above-presented embodiment, but it can be implemented within the scope of the appended claims.

## Claims

1. A method for controlling the position of a knuckle boom crane during movements of a forest working machine, wherein the method comprises at least the following steps:
- driving the forest working machine (1), which comprises a front frame (2), a rear frame (3), a joint (4) between said frames, allowing the swivelling of said frames in the lateral direction during the driving and thereby to change the angular position (A) of the front frame in relation to the rear frame, and a knuckle boom crane (10) placed on the front frame (2) to a swivelling device (11) arranged to swivel said crane around a vertical axis and thereby to change the rotary position (B) of the crane; wherein the swivelling device comprises first actuators (11a,11b) which produce a force effect to swivel the crane (10), and a control system (18) for controlling said swivelling device;
- changing the position of the forest working machine (1) during the driving in such a way that the angular position (A) is changed;
**characterized by**:
- controlling said swivelling device by means of said control system (18) of the forest working machine, said control system controlling said first actuators automatically during the driving in such a way that said rotary position (B), or the change of said rotary position, is kept dependent on said angular position (A), or the change of said angular position, according to a predetermined correlation (X) defined, set or stored in said control system.

2. The method according to claim 1, wherein the rear frame (3) comprises a load space (20) which is intended for the transport of trunks, and wherein the crane (10) or a tool (12) connected to the crane can be arranged to lie on the bottom of the load space (20) or on top of the trunks.

3. The method according to claim 1 or 2, wherein said predetermined correlation (X) is kept such that a part of the crane (10) which lies on the rear frame (3), or a tool (12) connected to the crane (10) and lying on the rear frame (3), is substantially stationary when said angular position is changed.

4. The method according to claim 1 or 2, wherein said predetermined correlation (X) is kept such that a part of the crane (10) placed at a distance above the rear frame (3), or a tool (12) connected to the crane (10) and spaced at a distance above the rear frame (3), is substantially stationary when said angular position is changed.

5. The method according to claim 1 or 2, wherein said predetermined correlation (X) is kept such that the position and orientation of the crane (10), when it is above the rear frame (3), remains substantially the same with respect to the position and orientation (14) of the rear frame (3), when said angular position is changed.

6. The method according to any of the claims 1 to 5, wherein
- the position of the crane (10) is changed by swivelling said swivelling device which comprises said first actuators (11 a, 11 b) which produce a force effect to swivel the crane (10), and
- the control system (18) of the forest working machine (1) is used to control said first actuators, said predetermined correlation (X) being set or stored in said control system.

7. The method according to claim 6, wherein the position of the forest working machine (1) is changed by swivelling said frame joint which comprises second actuators (4a, 4b) which can be controlled by means of said control system and which produce a force effect to swivel the frames (2, 3).

8. The method according to any of the claims 1 to 5, wherein
- the position of the crane (10) is changed by swivelling said swivelling device which comprises said first actuators (11 a, 11 b) which produce a force effect to swivel the crane (10),
- the position of the forest working machine (1) is changed by swivelling said frame joint which comprises second actuators (4a, 4b) and which produce a force effect to swivel the frames (2, 3),
- a pressurized medium circuit (18d) is used to control said first and second actuators, by means of which the second actuators (4a, 4b) can be coupled, when necessary, to the first actuators (11a, 11 b) in such a way that the control of the frame joint (4) simultaneously effects the control of the swivelling device (11), either by a constant or according to the predetermined correlation (X) which can be set.

9. The method according to any of the claims 1 to 8, wherein
- the crane (10) is transferred, either automatically or manually, to a position which is used as a reference position (12a), either before starting to drive or during driving, and
- the rotary position (B) of the crane (10) is automatically changed in relation to said reference position, according to said predetermined correlation (X).

10. The method according to any of the claims 1 to 9, wherein the control system (18) comprises a sensor (17) for determining said angular position.

11. The method according to any of the claims 1 to 10, wherein the control system (18) comprises a sensor (16) for determining said rotary position.

12. The method according to any of the claims 1 to 11, wherein, such an actuator (10d) of the crane (10), which takes care of the lifting and lowering of the crane (10), is simultaneously coupled to free floating.

13. A forest working machine which comprises:
- a front frame (2); a rear frame (3); a joint (4) between said frames, allowing the swivelling of said frames in the lateral direction during driving the forest working machine to change the angular position (A) of the front frame in relation to the rear frame;
- a knuckle boom crane (10) placed on the front frame (2);
- a swivelling device (11), connected to said crane, for turning said crane around a vertical axis and to change the rotary position (B) of the crane; wherein the swiveling device comprises first actuators (11a, 11 b) which produce a force effect to swivel the crane (10); and
- a control system (18) for controlling said swivelling device;
**characterized in that**:
- the control system (18) is further arranged to control said first actuators automatically during the driving of the forest working machine (1) in such a way that said rotary position (B), or the change of said rotary position, is kept dependent on said angular position (A), or the change of said angular position, according to a predetermined correlation (X) defined, set or stored in said control system.

14. The forest working machine according to claim 13, wherein the rear frame (3) comprises a load space (20) which is intended for the transport of trunks, and wherein the crane (10) or a tool (12) connected to the crane can be arranged to lie on the bottom of the load space (20) or on top of the trunks.

15. The forest working machine according to claim 13 or 14, wherein the control system (18) is arranged to keep the position and orientation (15) of the crane (10), or a given point of the crane (10), or a tool (12) connected to the crane, substantially stationary in relation to the rear frame (3), when the angular position (A) of the forest working machine is changed.

16. The forest working machine according to any of the claims 13 to 15, wherein the forest working machine comprises second actuators (4a, 4b) for changing the position of said joint, and wherein the control system (18) comprises a pressurized medium circuit (18d), by means of which the first actuators can be coupled, when necessary, to the second actuators in such a way that the control of the frame joint (4) simultaneously effects the control of the swivelling device (11), either according to a constant or the predetermined correlation (X) which can be set.

17. The forest working machine according to any of the claims 13 to 15, wherein said predetermined correlation (X) is set or stored in the control system (18), or said predetermined correlation (X) defined in the control system is kept such that the position and orientation of the crane (10) remains substantially the same with respect to the position and orientation (14) of the rear frame (3), when said angular position is changed.

18. The forest working machine according to any of the claims 13 to 17, wherein the control system (18) comprises a sensor (17) for determining said angular position.

19. The forest working machine according to any of the claims 13 to 18, wherein the crane (10) comprises a reference position, with respect to which said rotary position is arranged to be changed, wherein the reference position is either a given constant position or a selected position in which the crane is set.

## Patentansprüche

1. Verfahren zum Steuern der Position eines Knickarmkrans während der Bewegungen einer Forstarbeitsmaschine, wobei das Verfahren mindestens die folgenden Schritte umfasst:
- Fahren der Forstarbeitsmaschine (1), die einen Vorderrahmen (2), einen Hinterrahmen (3), ein Gelenk (4) zwischen den Rahmen, das das Schwenken der Rahmen in der Querrichtung während des Fahrens und dadurch die Winkelposition (A) des Vorderrahmens in Bezug auf den Hinterrahmen zu ändern gestattet, und einen Knickarmkran (10) umfasst, der auf dem Vorderrahmen (2) an einer Schwenkvorrichtung (11) platziert ist, die angeordnet ist, um den Kran um eine Vertikalachse zu schwenken und dadurch die Drehposition (B) des Krans zu ändern; wobei die Schwenkvorrichtung erste Betätigungsmittel (11a, 11 b), die eine Kraftwirkung erzeugen, um den Kran (10) zu schwenken, und ein Steuerungssystem (18) zum Steuern der Schwenkvorrichtung umfasst;
- Ändern der Position der Forstarbeitsmaschine (1) während des Fahrens auf eine solche Weise, dass die Winkelposition (A) geändert wird;
**gekennzeichnet durch**:
- Steuern der Schwenkvorrichtung mittels eines Steuerungssystems (18) der Forstarbeitsmaschine, wobei das Steuerungssystem die ersten Betätigungsmittel während des Fahrens auf eine solche Weise automatisch steuert, dass die Drehposition (B), oder die Änderung der Drehposition, von der Winkelposition (A), oder der Änderung der Winkelposition, abhängig gehalten wird, gemäß einer vorgegebenen Wechselbeziehung (X), die in dem Steuerungssystem definiert, eingestellt oder gespeichert ist.

2. Verfahren nach Anspruch 1, wobei der Hinterrahmen (3) einen Laderaum (20) umfasst, der für den Transport von Stämmen vorgesehen ist, und wobei der Kran (10) oder ein Werkzeug (12), das mit dem Kran verbunden ist, so angeordnet werden kann, dass er bzw. es auf dem Boden des Laderaums (20) oder oben auf den Stämmen liegt.

3. Verfahren nach Anspruch 1 oder 2, wobei die vorgegebene Wechselbeziehung (X) so gehalten wird, dass ein Teil des Krans (10), der auf dem Hinterrahmen (3) liegt, oder ein Werkzeug (12), das mit dem Kran (10) verbunden ist und auf dem Hinterrahmen (3) liegt, im Wesentlichen ortsfest ist, wenn die Winkelposition geändert wird.

4. Verfahren nach Anspruch 1 oder 2, wobei die vorgegebene Wechselbeziehung (X) so gehalten wird, dass ein Teil des Krans (10), der in einem Abstand über dem Hinterrahmen (3) platziert ist, oder ein Werkzeug (12), das mit dem Kran (10) verbunden und mit Zwischenraum in einem Abstand über dem Hinterrahmen (3) angeordnet ist, im Wesentlichen ortsfest ist, wenn die Winkelposition geändert wird.

5. Verfahren nach Anspruch 1 oder 2, wobei die vorgegebene Wechselbeziehung (X) so gehalten wird, dass die Position und Ausrichtung des Krans (10), wenn er sich über dem Hinterrahmen (3) befindet, in Bezug auf die Position und Ausrichtung (14) des Hinterrahmens (3) im Wesentlichen gleich bleibt, wenn die Winkelposition geändert wird.

6. Verfahren nach einem der Ansprüche 1 bis 5, wobei
- die Position des Krans (10) durch Schwenken der Schwenkvorrichtung geändert wird, die die ersten Betätigungsmittel (11 a, 11 b) umfasst, die eine Kraftwirkung erzeugen, um den Kran (10) zu schwenken, und
- das Steuerungssystem (18) der Forstarbeitsmaschine (1) zum Steuern der ersten Betätigungsmittel eingesetzt wird, wobei die vorgegebene Wechselbeziehung (X) in dem Steuerungssystem eingestellt oder gespeichert ist.

7. Verfahren nach Anspruch 6, wobei die Position der Forstarbeitsmaschine (1) durch Schwenken des Rahmengelenks geändert wird, das zweite Betätigungsmittel (4a, 4b) umfasst, die mittels des Steuerungssystems gesteuert werden können und die eine Kraftwirkung erzeugen, um die Rahmen (2, 3) zu schwenken.

8. Verfahren nach einem der Ansprüche 1 bis 5, wobei
- die Position des Krans (10) durch Schwenken der Schwenkvorrichtung geändert wird, die die ersten Betätigungsmittel (11 a, 11 b) umfasst, die eine Kraftwirkung erzeugen, um den Kran (10) zu schwenken,
- die Position der Forstarbeitsmaschine (1) durch Schwenken des Rahmengelenks geändert wird, das zweite Betätigungsmittel (4a, 4b) umfasst die eine Kraftwirkung erzeugen, um die Rahmen (2, 3) zu schwenken,
- ein Druckmittelkreis (18d), der zum Steuern der ersten und der zweiten Betätigungsmittel eingesetzt wird, mittels dessen die zweiten Betätigungsmittel (4a, 4b), falls erforderlich, an die ersten Betätigungsmittel (11a, 11 b) auf eine solche Weise gekoppelt werden können, dass die Steuerung des Rahmengelenks (4) gleichzeitig die Steuerung der Schwenkvorrichtung (11) bewirkt, entweder durch eine Konstante oder gemäß der vorgegebenen Wechselbeziehung (X), die eingestellt werden kann.

9. Verfahren nach einem der Ansprüche 1 bis 8, wobei
- der Kran (10), entweder automatisch oder manuell, zu einer Position verlagert wird, die als Referenzposition (12a) verwendet wird, entweder vor dem Beginn der Fahrt oder während der Fahrt, und
- die Drehposition (B) des Krans (10) in Bezug auf die Referenzposition, gemäß der vorgegebenen Wechselbeziehung (X), automatisch geändert wird.

10. Verfahren nach einem der Ansprüche 1 bis 9, wobei das Steuerungssystem (18) einen Sensor (17) zum Ermitteln der Winkelposition umfasst.

11. Verfahren nach einem der Ansprüche 1 bis 10, wobei das Steuerungssystem (18) einen Sensor (16) zum Ermitteln der Drehposition umfasst.

12. Verfahren nach einem der Ansprüche 1 bis 11, wobei ein Betätigungsmittel (10d) des Krans (10), das für das Heben und Senken des Krans (10) sorgt, gleichzeitig an den Freigang (free floating) gekoppelt ist.

13. Forstarbeitsmaschine, die Folgendes umfasst:
- einen Vorderrahmen (2); einen Hinterrahmen (3); ein Gelenk (4) zwischen den Rahmen, das das Schwenken der Rahmen in der Querrichtung während des Fahrens der Forstarbeitsmaschine gestattet, um die Winkelposition (A) des Vorderrahmens in Bezug auf den Hinterrahmen zu ändern;
- einen Knickarmkran (10), der auf dem Vorderrahmen (2) platziert ist;
- eine Schwenkvorrichtung (11), die mit dem Kran verbunden ist, um den Kran um eine Vertikalachse zu drehen und um die Drehposition(B) des Krans zu ändern; wobei die Schwenkvorrichtung erste Betätigungsmittel (11a, 11b) umfasst, die eine Kraftwirkung erzeugen, um den Kran (10) zu schwenken; und
- ein Steuerungssystem (18) zum Steuern der Schwenkvorrichtung;
**dadurch gekennzeichnet, dass**:
- das Steuerungssystem (18) außerdem angeordnet ist, um die ersten Betätigungsmittel während des Fahrens der Forstarbeitsmaschine (1) auf eine solche Weise automatisch zu steuern, dass die Drehposition (B), oder die Änderung der Drehposition, von der Winkelposition (A), oder der Änderung der Winkelposition, abhängig gehalten wird, gemäß einer vorgegebenen Wechselbeziehung (X), die in dem Steuerungssystem definiert, eingestellt oder gespeichert ist.

14. Forstarbeitsmaschine nach Anspruch 13, wobei der Hinterrahmen (3) einen Laderaum (20) umfasst, der für den Transport von Stämmen vorgesehen ist, und wobei der Kran (10) oder ein Werkzeug (12), das mit dem Kran verbunden ist, so angeordnet werden kann, dass er bzw. es auf dem Boden des Laderaums (20) oder oben auf den Stämmen liegt.

15. Forstarbeitsmaschine nach Anspruch 13 oder 14, wobei das Steuerungssystem (18) ausgestaltet ist, die Position und Ausrichtung (15) des Krans (10), oder einer gegebenen Stelle des Krans (10), oder eines Werkzeugs (12), das mit dem Kran verbunden ist, in Bezug auf den Hinterrahmen (3) im Wesentlichen ortsfest zu halten, wenn die Winkelposition (A) der Forstarbeitsmaschine geändert wird.

16. Forstarbeitsmaschine nach einem der Ansprüche 13 bis 15, wobei die Forstarbeitsmaschine zweite Betätigungsmittel (4a, 4b) zum Ändern der Position des Gelenks umfasst, und wobei das Steuerungssystem (18) einen Druckmittelkreis (18d) umfasst, mittels dessen die ersten Betätigungsmittel, falls erforderlich, auf eine solche Weise an die zweiten Betätigungsmittel gekoppelt werden können, dass die Steuerung des Rahmengelenks (4) gleichzeitig die Steuerung der Schwenkvorrichtung (11) bewirkt, entweder gemäß einer Konstanten oder gemäß der vorgegebenen Wechselbeziehung (X), die eingestellt werden kann.

17. Forstarbeitsmaschine nach einem der Ansprüche 13 bis 15, wobei die vorgegebene Wechselbeziehung (X) in dem Steuerungssystem (18) eingestellt oder gespeichert wird, oder die vorgegebene, im Steuerungssystem definierte Wechselbeziehung (X) so gehalten wird, dass die Position und Ausrichtung des Krans (10) in Bezug auf die Position und Ausrichtung (14) des Hinterrahmens (3) im Wesentlichen gleich bleibt, wenn die Winkelposition geändert wird.

18. Forstarbeitsmaschine nach einem der Ansprüche 13 bis 17, wobei das Steuerungssystem (18) einen Sensor (17) zum Ermitteln der Winkelposition umfasst.

19. Forstarbeitsmaschine nach einem der Ansprüche 13 bis 18, wobei der Kran (10) eine Referenzposition umfasst, auf die bezogen die Drehposition änderbar ausgestaltet ist, wobei die Referenzposition entweder eine gegebene konstante Position oder eine ausgewählte Position ist, in die der Kran gebracht wird.

## Revendications

1. Procédé pour commander la position d'une grue à flèche articulée pendant les mouvements d'une machine de travail en forêt, dans lequel le procédé comprend au moins les étapes suivantes :
- conduite de la machine de travail en forêt (1), qui comprend un châssis avant (2), un châssis arrière (3), une articulation (4) entre lesdits châssis, permettant le pivotement desdits châssis dans la direction latérale pendant la conduite et pour ainsi changer la position angulaire (A) du châssis avant par rapport au châssis arrière, et une grue à flèche articulée (10) placée sur le châssis avant (2) sur un dispositif de pivotement (11) agencé pour faire pivoter ladite grue autour d'un axe vertical et pour ainsi changer la position en rotation (B) de la grue ; dans lequel le dispositif de pivotement comprend des premiers actionneurs (11 a, 11b) qui produisent un effet de force pour faire pivoter la grue (10), et un système de commande (18) pour commander ledit dispositif de pivotement ;
- changement de la position de la machine de travail en forêt (1) pendant la conduite de telle manière que la position angulaire (A) est changée ;
**caractérisé par** :
- la commande dudit dispositif de pivotement au moyen dudit système de commande (18) de la machine de travail en forêt, ledit système de commande commandant lesdits premiers actionneurs automatiquement pendant la conduite de telle manière que ladite position en rotation (B), ou le changement de ladite position en rotation, est maintenu(e) dépendant(e) de ladite position angulaire (A), ou du changement de ladite position angulaire, en fonction d'une corrélation (X) prédéterminée définie, fixée ou stockée dans ledit système de commande.

2. Procédé selon la revendication 1, dans lequel le châssis arrière (3) comprend un espace de chargement (20) qui est destiné au transport de troncs, et dans lequel la grue (10) ou un outil (12) connecté à la grue peut être agencé(e) de manière à reposer sur le fond de l'espace de chargement (20) ou au-dessus des troncs.

3. Procédé selon la revendication 1 ou 2, dans lequel ladite corrélation (X) prédéterminée est maintenue telle qu'une partie de la grue (10) qui repose sur le châssis arrière (3), ou un outil (12) connecté à la grue (10) et reposant sur le châssis arrière (3), est substantiellement stationnaire lorsque ladite position angulaire est changée.

4. Procédé selon la revendication 1 ou 2, dans lequel ladite corrélation (X) prédéterminée est maintenue telle qu'une partie de la grue (10) placée à une distance au-dessus du châssis arrière (3), ou un outil (12) connecté à la grue (10) et espacé d'une distance au-dessus du châssis arrière (3), est substantiellement stationnaire lorsque ladite position angulaire est changée.

5. Procédé selon la revendication 1 ou 2, dans lequel ladite corrélation (X) prédéterminée est maintenue telle que la position et l'orientation de la grue (10), lorsqu'elle est au-dessus du châssis arrière (3), restent substantiellement les mêmes par rapport à la position et à l'orientation (14) du châssis arrière (3), lorsque ladite position angulaire est changée.

6. Procédé selon l'une quelconque des revendications 1 à 5, dans lequel
- la position de la grue (10) est changée en faisant pivoter ledit dispositif de pivotement qui comprend lesdits premiers actionneurs (11 a, 11 b) qui produisent un effet de force pour faire pivoter la grue (10), et
- le système de commande (18) de la machine de travail en forêt (1) est utilisé pour commander lesdits premiers actionneurs, ladite corrélation (X) prédéterminée étant fixée ou stockée dans ledit système de commande.

7. Procédé selon la revendication 6, dans lequel la position de la machine de travail en forêt (1) est changée en faisant pivoter ladite articulation de châssis qui comprend des deuxièmes actionneurs (4a, 4b) qui peuvent être commandés au moyen dudit système de commande et qui produisent un effet de force pour faire pivoter les châssis (2, 3).

8. Procédé selon l'une quelconque des revendications 1 à 5, dans lequel
- la position de la grue (10) est changée en faisant pivoter ledit dispositif de pivotement qui comprend lesdits premiers actionneurs (11 a, 11 b) qui produisent un effet de force pour faire pivoter la grue (10),
- la position de la machine de travail en forêt (1) est changée en faisant pivoter ladite articulation de châssis qui comprend des deuxièmes actionneurs (4a, 4b) et qui produisent un effet de force pour faire pivoter les châssis (2, 3),
- un circuit de moyen sous pression (18d) est utilisé pour commander lesdits premiers et deuxièmes actionneurs, au moyen duquel les deuxièmes actionneurs (4a, 4b) peuvent être couplés, lorsque nécessaire, aux premiers actionneurs (11 a, 11 b) de telle manière que la commande de l'articulation de châssis (4) exécute simultanément la commande du dispositif de pivotement (11), soit en fonction d'une constante, soit en fonction de la corrélation (X) prédéterminée qui peut être fixée.

9. Procédé selon l'une quelconque des revendications 1 à 8, dans lequel
- la grue (10) est transférée, soit automatiquement, soit manuellement, jusqu'à une position qui est utilisée comme une position de référence (12a), soit avant de commencer la conduite, soit pendant la conduite, et
- la position en rotation (B) de la grue (10) est automatiquement changée par rapport à ladite position de référence, en fonction de ladite corrélation (X) prédéterminée.

10. Procédé selon l'une quelconque des revendications 1 à 9, dans lequel le système de commande (18) comprend un capteur (17) pour déterminer ladite position angulaire.

11. Procédé selon l'une quelconque des revendications 1 à 10, dans lequel le système de commande (18) comprend un capteur (16) pour déterminer ladite position en rotation.

12. Procédé selon l'une quelconque des revendications 1 à 11, dans lequel, un tel actionneur (10d) de la grue (10), qui est chargé de la montée et de la descente de la grue (10), est couplé simultanément à la marche libre (free floating).

13. Machine de travail en forêt qui comprend :
- un châssis avant (2) ; un châssis arrière (3) ; une articulation (4) entre lesdits châssis, permettant le pivotement desdits châssis dans la direction latérale pendant la conduite de la machine de travail en forêt pour changer la position angulaire (A) du châssis avant par rapport au châssis arrière ;
- une grue à flèche articulée (10) placée sur le châssis avant (2) ;
- un dispositif de pivotement (11), connecté à ladite grue, pour faire tourner ladite grue autour d'un axe vertical et pour changer la position en rotation (B) de la grue ; dans lequel le dispositif de pivotement comprend des premiers actionneurs (11a, 11 b) qui produisent un effet de force pour faire pivoter la grue (10) ; et
- un système de commande (18) pour commander ledit dispositif de pivotement ;
**caractérisée en ce que** :
- le système de commande (18) est en outre agencé pour commander lesdits premiers actionneurs automatiquement pendant la conduite de la machine de travail en forêt (1) de telle manière que ladite position en rotation (B), ou le changement de ladite position en rotation, est maintenu(e) dépendant(e) de ladite position angulaire (A), ou du changement de ladite position angulaire, en fonction d'une corrélation (X) prédéterminée définie, fixée ou stockée dans ledit système de commande.

14. Machine de travail en forêt selon la revendication 13, dans laquelle le châssis arrière (3) comprend un espace de chargement (20) qui est destiné au transport de troncs, et dans laquelle la grue (10) ou un outil (12) connecté à la grue peut être agencé(e) de manière à reposer sur le fond de l'espace de chargement (20) ou au-dessus des troncs.

15. Machine de travail en forêt selon la revendication 13 ou 14, dans laquelle le système de commande (18) est agencé de façon à maintenir la position et l'orientation (15) de la grue (10), ou d'un point donné de la grue (10), ou d'un outil (12) connecté à la grue, substantiellement stationnaires par rapport au châssis arrière (3), lorsque la position angulaire (A) de la machine de travail en forêt est changée.

16. Machine de travail en forêt selon l'une quelconque des revendications 13 à 15, dans laquelle la machine de travail en forêt comprend des deuxièmes actionneurs (4a, 4b) pour changer la position de ladite articulation, et dans laquelle le système de commande (18) comprend un circuit de milieu sous pression (18d), au moyen duquel les premiers actionneurs peuvent être couplés, lorsque nécessaire, aux deuxièmes actionneurs de telle manière que la commande de l'articulation de châssis (4) exécute simultanément la commande du dispositif de pivotement (11), en fonction soit d'une constante, soit de la corrélation (X) prédéterminée qui peut être fixée.

17. Machine de travail en forêt selon l'une quelconque des revendications 13 à 15, dans laquelle ladite corrélation (X) prédéterminée est fixée ou stockée dans le système de commande (18), ou bien ladite corrélation (X) prédéterminée définie dans le système de commande est maintenue telle que la position et l'orientation de la grue (10) restent substantiellement les mêmes par rapport à la position et à l'orientation (14) du châssis arrière (3), lorsque ladite position angulaire est changée.

18. Machine de travail en forêt selon l'une quelconque des revendications 13 à 17, dans laquelle le système de commande (18) comprend un capteur (17) pour déterminer ladite position angulaire.

19. Machine de travail en forêt selon l'une quelconque des revendications 13 à 18, dans laquelle la grue (10) comprend une position de référence, par rapport à laquelle ladite position en rotation est agencée de façon à être changée, dans laquelle la position de référence est soit une position constante donnée, soit une position sélectionnée dans laquelle la grue est fixée.
